# EUROPEAN PATENT APPLICATION

(11) **EP 4 834 652 A1**
(43) Date of publication of application: **04.11.2026**
(21) Application number: 24913348.9
(22) Date of filing: 18.11.2024
(51) Int. Cl.: B60L 58/20, H02M 3/156

(54) **BATTERY MANAGEMENT SYSTEM AND METHOD FOR AGRICULTURAL ELECTRIC VEHICLE**

(30) Priority: 26.12.2023 KR 20230191097; 10.10.2024 KR 20240137313
(71) Applicant: LS Mtron Ltd., Anyang-si, Gyeonggi-do 14119 (KR)
(72) Inventor: ROH, Si Hong, Anyang-si Gyeonggi-do 14119 (KR); KANG, Dong Woo, Anyang-si Gyeonggi-do 14119 (KR); KIM, Dong Wook, Anyang-si Gyeonggi-do 14119 (KR); RYU, Myong Jin, Anyang-si Gyeonggi-do 14119 (KR); PARK, Chan, Anyang-si Gyeonggi-do 14119 (KR)
(74) Representative: K&L Gates LLP
(86) International application number: PCT/KR2024/018180
(87) International publication number: WO 2025/143541

(57) **Abstract**

The present invention is directed to battery management technology for agricultural electric vehicles. A battery management system for an agricultural electric vehicle according to the present invention may identify the voltage of a low-voltage battery upon charging a high-voltage battery, and may activate or deactivate a voltage converter based on the identified voltage value, thereby increasing the charging speed of the high-voltage battery.

## Description

### Technical Field

The present invention relates to battery management technology for agricultural electric vehicles.

### Background Art

Agricultural work vehicles are vehicles developed for agricultural work.

Agricultural work vehicles include tractors, combines, rice transplanters, and the like.

Agricultural work vehicles are continuously being developed and evolving to facilitate agricultural work.

Recently, electric-powered agricultural electric vehicles are being developed due to advancements in battery technology.

Agricultural electric vehicles are each provided with a high-voltage battery and a low-voltage battery. For example, the high-voltage battery provides 350 V power, while the low-voltage battery provides 12 V power.

The high-voltage battery replaces a conventional internal combustion engine.

The high-voltage battery is primarily used to secure driving power for driving or agricultural work, which consumes a large amount of power.

The power from the high-voltage battery is discharged by the driving of high-voltage electrical loads such as a drive motor or a hydraulic pump.

The power of the low-voltage battery is discharged by the driving of low-voltage electrical loads such as lights or various types of control devices.

The discharged high-voltage and low-voltage batteries require charging.

The charging of the high-voltage battery is performed using external power.

The charging of the low-voltage battery is performed using the power of the high-voltage battery or external power.

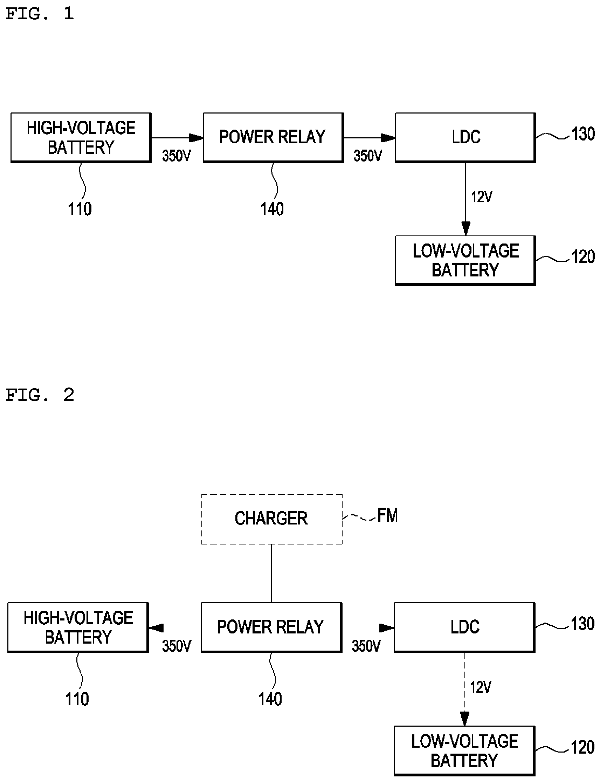

In the situation in which external power is not connected, the charging of the low-voltage battery 120 depends on the power of the high-voltage battery 110, as shown in the reference view of FIG. 1.

In the case where the low-voltage battery 120 is charged with the power of the high-voltage battery 110, as shown in FIG. 1, the discharge of the high-voltage battery 110 is entailed.

In the situation in which external power is connected and thus the high-voltage battery 110 is being charged, the charging of the low-voltage battery 120 depends on external power, as shown in the reference view of FIG. 2.

As shown in FIG. 2, the external power provided via a charger FM is divided at a power relay 140. A portion of the divided external power is used to charge the high-voltage battery 110, and the remainder of the external power is used to charge the low-voltage battery 120.

As shown in FIGS. 1 and 2, a voltage converter 130 is provided to charge the low-voltage battery 120 with the power of the high-voltage battery 110 or external power.

The voltage converter 130 is installed between the power relay 140 and the low-voltage battery 120.

The voltage converter 130 is named a so-called Low-Voltage DC-DC Converter (LDC).

Conventionally, lead-acid batteries have been used as 12 V low-voltage batteries.

Lead-acid batteries have the advantage of being rechargeable and usable even after over-discharge, but they are heavy and have low charge density. Lead and acid are also environmental pollutants.

For various reasons, there has been a recent trend toward using lithium-ion batteries as 12 V low-voltage batteries.

Lithium-ion batteries have a fatal weakness in that they cannot be recharged when they are over-discharged. When a lithium-ion battery is applied, it is necessary to maintain the stability of the low-voltage battery 120 by making an implementation such that the low-voltage battery 120 is charged with the power output from the voltage converter 130.

An implementation is made such that, when the high-voltage battery 110 is charged, the voltage converter 130 operates continuously to stabilize the low-voltage battery 120.

Although the research and development of agricultural electric vehicles is accelerating in line with the environment-friendly trend, their widespread adoption remains sluggish. One of various reasons for this sluggish adoption is the excessive charging time required for high-voltage batteries in agricultural electric vehicles. In the case of slow charging rather than rapid charging, a charging time exceeding six hours is required. This is the reason why various types of research into increases in the charging speed of agricultural electric vehicles are actively being conducted.

### [Conventional Art Literature]

### [Patent Literature]

(Patent Document 1) Korean Patent Application Publication 10-2022-0073891
(Patent Document 2) Korean Patent Application Publication 10-2018-0063571
(Patent Document 3) Korean Patent Application Publication 10-2022-0117033

### Disclosure

### Technical Problem

There is a continuing need for the proposal of battery management technology that may improve charging speeds in agricultural electric vehicles.

### Technical Solution

A battery management system for an agricultural electric vehicle according to the present invention includes: a high-voltage battery configured to provide high-voltage power and be charged with external power; a low-voltage battery configured to provide low-voltage power at a lower voltage than that of the high-voltage battery and be charged with the power of the high-voltage battery or external power; a voltage converter configured to convert the power of the high-voltage battery into low-voltage power and supply this low-voltage power to the low-voltage battery and low-voltage electrical loads; and a controller configured to, when the charging of the high-voltage battery starts, check the voltage of the low-voltage battery and control the voltage converter to be activated or deactivated.

The controller may control the voltage converter to be deactivated when the voltage of the low-voltage battery is equal to or higher than a first set value in charging mode in which the high-voltage battery is charged, and, after deactivating the voltage converter, control the voltage converter to be activated such that the low-voltage battery is charged when the voltage of the low-voltage battery is lower than a second set value that is lower than the first set value.

When deactivating the voltage converter in the charging mode, the controller may control the low-voltage electrical loads to be operated with the power of the low-voltage battery.

The charging of the low-voltage battery may be performed in the state in which the power of the low-voltage battery is not supplied to the low-voltage electrical loads.

After activating the voltage converter in the charging mode, the controller may control the voltage converter to be deactivated when the state of charge of the low-voltage battery is equal to or higher than a third set value.

The first set value may be a voltage value at which the operation of the low-voltage electrical loads operating in the charging mode can be performed using the power of the low-voltage battery, and the second set value may be a voltage value at which the charging of the low-voltage battery can start without damaging the low-voltage battery.

A battery management method for an agricultural electric vehicle according to the present invention includes: a first checking step of checking whether the voltage of a low-voltage battery is equal to or higher than a first set value when the charging of a high-voltage battery starts; a deactivation step of deactivating a voltage converter when the voltage of the low-voltage battery is determined to be equal to or higher than the first set value in the first checking step; a second checking step of, after the deactivation step, checking whether the voltage of the low-voltage battery is lower than a second set value; and an activation step of activating the voltage converter when the voltage of the low-voltage battery is determined to be lower than the first set value in the first checking step or when the voltage of the low-voltage battery is determined to be lower than the second set value in the second checking step; the first checking step, the deactivation step, the second checking step, and the activation step are performed in charging mode in which the high-voltage battery is charged; and the second set value is a voltage value lower than the first set value.

The battery management method may further include a third checking step of, after the activation step, checking whether the state of charge of the low-voltage battery is equal to or higher than a third set value, and the method may enter the deactivation step when the state of charge of the low-voltage battery is equal to or higher than the third set value in the third checking step.

### Advantageous Effects

According to the present invention, there is an effect of improving the charging speed of a high-voltage battery while maintaining the stability of a low-voltage battery.

### Description of Drawings

FIGS. 1 and 2 are reference views illustrating a conventional art;
FIG. 3 is a block diagram of a battery management system for an agricultural electric vehicle according to one embodiment of the present invention;
FIG. 4 is a reference view illustrating a power distributor applied to the management system of FIG. 1;
FIGS. 5 and 6 are reference views illustrating the operation state of the management system of FIG. 3; and
FIG. 7 is a flowchart illustrating a battery management method performed in the management system of FIG. 3.

### Mode for Invention

Preferred embodiments according to the present invention will be described with reference to the accompanying drawings. However, for the sake of brevity, descriptions of well-known configurations are omitted or abridged as much as possible.

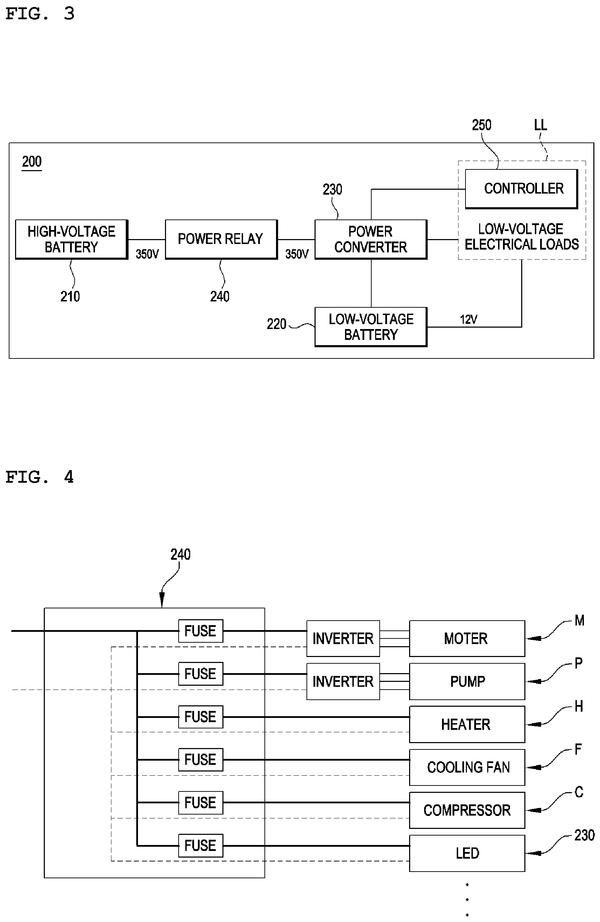

FIG. 3 is a diagram of the configuration of a battery management system (hereinafter abbreviated as the 'management system') 200 for an agricultural electric vehicle according to one embodiment of the present invention.

The management system 200 of FIG. 3 includes a high-voltage battery 210, a low-voltage battery 220, a voltage converter 230, a power relay 240, and a controller 250.

The high-voltage battery 210 provides high-voltage (DC 360 V) power used as the driving force required for the driving or agricultural work of the agricultural electric vehicle.

The low-voltage battery 220 provides lower-voltage (DC 12 V) power than the high-voltage battery 210.

The starting and stopping of the agricultural electric vehicle, the operation of various types of lights, and operation for various types of control are performed using the power of the low-voltage battery 220.

The present invention preferentially takes into consideration a case where a lithium-ion battery is applied as the low-voltage battery 220. However, the present invention does not exclude the application of a lead-acid battery as the low-voltage battery 220.

The voltage converter 230 converts the high-voltage power of the high-voltage battery 210 into low-voltage power.

The voltage converter 230 is placed between the high-voltage battery 210 and the low-voltage battery 220.

The voltage converter 230 is placed between the power relay 240 and the low-voltage battery 220.

The voltage converter 230 is placed between the high-voltage battery 210 and low-voltage electrical loads LL.

The voltage converter 230 is placed between the power relay 240 and the low-voltage electrical loads LL.

The low-voltage power output from the voltage converter 230 is provided to the low-voltage electrical loads LL, including the low-voltage battery 220 and the controller 250.

The voltage converter 230 may be activated or deactivated by the control of the controller 250.

The power relay 240 relays the high-voltage power, provided by the high-voltage battery 210 or a charger FM, to the voltage converter 230.

The power relay 240 is a power distributor, or includes a power distributor.

The power relay 240 may distribute the power of the high-voltage battery 210 to high-voltage electrical loads.

Referring to FIG. 4, the power relay 240 distributes power to an electric motor M, a hydraulic motor P, a heater H, a fan motor F, a compressor C, the voltage converter 230, and the like.

The controller 250 may be the top-level control means of many control means applied to the agricultural electric vehicle.

The controller 250 manages all other control means applied to the agricultural electric vehicle.

The top-level controller 250 in the agricultural electric vehicle is typically referred to as an Electric Vehicle Controller Unit (EVCU).

The controller 250 may ultimately control the operations of all controllable electrical loads by controlling lower-level control means.

However, the controller 250 may be a separate control means provided to supervise and direct a charging process according to the needs of the present invention.

The controller 250 may control the voltage converter 230 to be activated or deactivated.

The controller 250 checks the voltage of the low-voltage battery 120, and controls the voltage converter 230 to be activated or deactivated.

For example, in the case where the charging of the high-voltage battery 210 starts, when the voltage of the low-voltage battery 220 is equal to or higher than a first set value (e.g., '11 V'), the controller 250 controls the voltage converter 230 to be deactivated.

When the voltage converter 230 is in a deactivated state, the power of the low-voltage battery 220 is supplied to the low-voltage electrical loads LL.

For example, in the case where the charging of the high-voltage battery 210 starts, when the voltage of the low-voltage battery 120 is lower than a second set value (e.g., '10.5 V'), the controller 250 controls the voltage converter 230 to be activated.

When the voltage converter 230 is in an activated state, the charging of the low-voltage battery 220 is performed and the power output from the voltage converter 230 is supplied to the low-voltage electrical loads LL.

The controller 250 may identify the state of charge of the low-voltage battery 220 during a charging process.

The state of charge may be calculated as a percentage.

When the total possible charge capacity is 100%, the state of charge identified by the controller 250 theoretically has a value between 0 and 100%.

The controller 250 controls the voltage converter 230 to be deactivated according to the state of charge of the low-voltage battery 220 during a charging process.

For example, when the state of charge of the low-voltage battery 220 is equal to or higher than a third set value (e.g., '90%'), the controller 250 controls the voltage converter 230 to be deactivated.

The controller 250 controls the control means, related to the control of the high-voltage electrical loads, to be switched to a dormant state.

The high-voltage electrical loads may include an electric motor M or a hydraulic motor P.

The power produced by the electric motor M is mainly used for the driving and agricultural work of the electric agricultural vehicle.

The power produced by the hydraulic motor P is mainly used in agricultural work.

For reference, the high-voltage electrical loads and low-voltage electrical loads LL mentioned above will be described.

The electrical loads refer to electrical components that discharge electricity from the high-voltage battery 210 or the low-voltage battery 220 by consuming power.

The electrical loads are divided into the high-voltage electrical loads and the low-voltage electrical loads LL.

The high-voltage electrical loads consume power from the high-voltage battery 210.

The low-voltage electrical loads LL consume power from the low-voltage battery 220.

The high-voltage electrical loads may correspond to the electric motor M, the hydraulic motor P, and the compressor C.

The low-voltage electrical loads LL may correspond to various types of lights, ignition on/off keys, an On-Board Charger (OBC), and various types of control means.

The OBC is a voltage conversion means. The OBC converts alternating current (AC) power from electric vehicle supply equipment (EVSE) into direct current (DC) power, and supplies it to the high-voltage battery 210.

The various types of control means include the controller 250.

The various types of control means include a Battery Management System (BMS), an Electric Vehicle Communication Controller (EVCC), a Transmission Control Unit (TCU), and a hydraulic control means located at lower levels below the controller 250.

The BMS performs the functions of battery voltage monitoring, battery temperature monitoring, current control, and battery error diagnosis and protection.

The BMS may manage a charging process to ensure safe and efficient charging using an optimal charging algorithm while monitoring the charging process.

The electric vehicle communication controller checks whether the BMS and the OBC are ready for charging, and communicates checking results to an electric vehicle charging device.

The TCU controls the electronically operated transmission.

The hydraulic control means controls hydraulic pressure.

According to the management system 200 of the present invention, the voltage converter 130 may not be operated continuously after charging has started. Instead, the voltage converter 130 may be activated or deactivated.

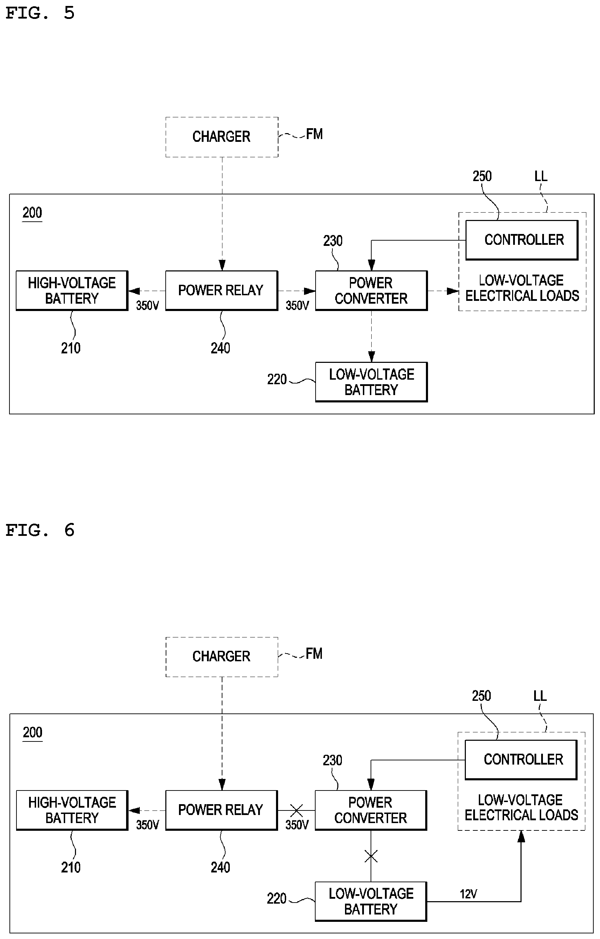

FIG. 5 shows the state in which the voltage converter 230 is activated after charging has started.

Referring to FIG. 5, the external power from the charger FM is divided at the power relay 240, and part of the external power is supplied to the high-voltage battery 210 and the remainder thereof is supplied to the voltage converter 230.

The low-voltage power output from the voltage converter 230 is supplied to the low-voltage battery 220 and the low-voltage electrical loads LL.

In the state of FIG. 5, the external power coming from the charger FM is not fully used to charge the high-voltage battery 210 unlike in the past.

Generally, the electrical energy conversion efficiency of the voltage converter 230 is 90% or less.

Only the remaining power, obtained by subtracting the portion used to charge the low-voltage battery 220, the portion used to operate the low-voltage electrical loads LL, and the loss caused by the conversion efficiency of the voltage converter 230 from the power coming from the charger FM, is used to charge the high-voltage battery 210.

When the controller 250 deactivates the voltage converter 230, switching to the state of FIG. 6 is achieved.

In the state of FIG. 6, no power is output from the voltage converter 230.

The controller 250 performs control so that the low-voltage electrical loads LL are operated using the power of the low-voltage battery 220.

The state of FIG. 5 and the state of FIG. 6 may be appropriately switched according to the control of the controller 250.

The controller 250 selectively activates or deactivates the voltage converter 230 depending on whether a specific condition is satisfied.

The management system 200 according to the present invention may contribute to increasing the charging speed of the high-voltage battery 210, particularly in the charging mode for the high-voltage battery 210.

In the charging mode, the controller 250 activates or deactivates the voltage converter 230 while checking the state of the low-voltage battery 220.

As shown in FIG. 6, in the state in which the voltage converter 230 has been deactivated, the power from the charger FM is not used for the charging of the low-voltage battery 220 or for the operation of the low-voltage electrical loads LL. Instead, all the power from the charger FM is used fully for the charging of the high-voltage battery 210. The charging speed of the high-voltage battery 210 is increased accordingly.

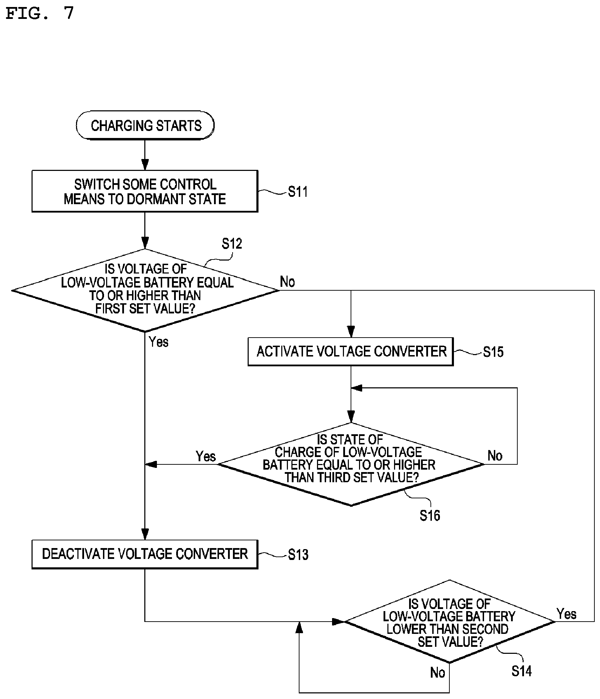

A preferred example of a battery management method performed in an agricultural electric vehicle equipped with the management system 200 of FIG. 3 will be described below, together with the flowchart of FIG. 7.

FIG. 7 is a flowchart of a battery management method performed in charging mode. Referring to FIG. 7, the following description will be made in sequence for the sake of convenience.

### 1. Switching of Some Control Means to Dormant State <S11>

When the charging of the high-voltage battery 210 starts, the controller 250 deactivates lower-level control means related to the control of the high-voltage electrical loads that are operated using high-voltage power, thereby switching them to a dormant state. The reason for this is to prevent the unnecessary leakage of power in charging mode.

In charging mode, the operations of the controller 250, the electric vehicle communication controller, the BMS, and the OBC are required.

In charging mode, the driving or agricultural work of the agricultural electric vehicle will not be performed. In charging mode, the role of the TCU or hydraulic control means is not required.

The controller 250 controls the TCU or hydraulic control means, which is not required to perform a role, to be switched to a dormant state.

When various types of control means that are not directly related to charging are switched to a dormant state, there is no waste of power accordingly, so that the charging speed of the high-voltage battery 210 can be increased.

It is most preferable to make an implementation such that step S11 is performed first when charging starts after switching to charging mode.

However, step S11 may be implemented to be performed at any point in time during the process of performing steps S12 to S15 to be described later.

For reference, when the charging of the high-voltage battery 210 starts, some high-voltage electrical loads that are unrelated to the charging of the high-voltage battery 210 or the low-voltage battery 220 also enter a dormant state.

### 2. First Checking <S12>

The controller 250 checks whether the voltage of the low-voltage battery 220 is equal to or higher than a first set value. The first set value is a voltage value that is preset in the controller 150.

The first set value is preferably a voltage value at which the operation of the low-voltage electrical loads LL operating in charging mode can be appropriately performed using the power of the low-voltage battery 220.

As one example, the first set value in the 12 V low-voltage battery 120 may be 11 V.

### 3. Deactivation of Voltage Converter <S13>

In step S12, when the voltage of the low-voltage battery 220 is equal to or higher than the first set value, the controller 150 deactivates the voltage converter 230 to be switched to the state of FIG. 6.

When the voltage converter 230 is deactivated, the controller 250 controls the low-voltage electrical loads LL to be operated using the power of the low-voltage battery 220.

After step S13, the controller 250, the electric vehicle communication controller, the BMS, and the OBC are operated using the power of the low-voltage battery 220.

When step S13 is performed, the power supplied from the charger FM through the voltage converter 130 to the low-voltage battery 220 or low-voltage electronic loads LL is eliminated. All the power coming from the charger FM is used to charge the high-voltage battery 210, and the charging speed of the high-voltage battery 210 increases accordingly.

### 4. Second Checking <S14>

In the state in which the voltage converter 230 has been deactivated, the controller 250 continuously checks whether the voltage of the low-voltage battery 220 is lower than a second set value.

The second set value is also a voltage value that is preset in the controller 250.

The second set value is preferably a voltage value at which charging can start appropriately in the state in which the low-voltage battery 220 has been discharged to the extent that it is not damaged.

The second set value is lower than the first set value.

As one example, the second set value in the 12 V low-voltage battery 220 may be 10.5 V.

The voltage of the low-voltage battery 120 is continuously checked through step S14 in the state in which the voltage converter 230 has been deactivated. Accordingly, during the charging process, the power of the low-voltage battery 120 may be utilized, and also the stability of the low-voltage battery 120 may be dealt with immediately.

### 5. Activation of Voltage Converter <S15>

In step S12, when the voltage of the low-voltage battery 220 is lower than the first set value, the controller 250 activates the voltage converter 230 to be switched to the state of FIG. 5.

Furthermore, in step S14, when the voltage of the low-voltage battery 220 is lower than the second set value, the controller 250 activates the voltage converter 230 to be switched to the state of FIG. 5.

In the state of FIG. 5, the voltage converter 230 is operating, so that the low-voltage battery 220 is charged with a portion of the power from the charger FM.

The controller 250, the electric vehicle communication controller, the BMS, and the OBC, which are the low-voltage electrical loads LL, are also operated using the power output from the voltage converter 230.

The meaning of the activation in step S15 also includes maintaining the state of the voltage converter 230 that has been already activated.

The activation of the voltage converter 230 that is performed immediately after step S12 means maintaining the activated state of the voltage converter 230 that has been already activated.

The activation of the voltage converter 230 that is performed after the sequential passage through steps S13 and S14 in step S12 means activating the voltage converter 230 that has been previously deactivated.

### 6. Third Checking <S16>

After the voltage converter 230 has been activated by step S15, the controller 250 checks whether the state of charge of the low-voltage battery 220 is equal to or higher than a third set value.

The third set value is a value that is preset in the controller 250.

As one example, the third set value may be a percentage value to the total charge capacity of the low-voltage battery 220. For example, the third set value may be a percentage value of 90% to the total charge capacity of the low-voltage battery 120.

When the state of charge is equal to or higher than the third set value, the controller 250 determines that the low-voltage battery 220 has been sufficiently stabilized, and performs control so that step S13 is entered. Accordingly, the management system 200 is switched to the state of FIG. 6, and the charging speed of the high-voltage battery 210 is increased.

According to the present invention, the activation and deactivation of the voltage converter 230 is determined based on the voltage value of the low-voltage battery 220. This may be particularly well combined with the special situation of the charging mode.

Charging may be started and stopped at the discretion of an administrator. The charging time may be adjusted by the administrator as needed. Accordingly, it is more preferable to determine the activation or deactivation of the voltage converter 230 based on the voltage value of the low-voltage battery 220 rather than the state of charge of the low-voltage battery 220.

In contrast, it is more preferable that the condition for entering step S13 in step S16 be based on the state of charge of the low-voltage battery 220.

The condition for the process of entering step S13 in step S16 may be based on the voltage value. For example, in the case of a low-voltage battery having an output voltage of 12 V, the third set value may be set to 12 V.

When the state of charge of the low-voltage battery 220 is equal to or higher than a predetermined value, the output voltage of the low-voltage battery 220 is constant at 12 V. In this case, the detection of the third set value is performed at the smallest state of charge at which 12 V can be output. When an implementation is made in this manner, a circulation flow that passes through steps S16, S13, S14, and S15 and then connects to step S16 may be repeated many times during the process of charging the high-voltage battery 210.

Many repetitions of the circulation flow require power consumption due to frequent control. The charging speed of the high-voltage battery 210 is reduced accordingly.

The present invention is intended for the stabilization of the low-voltage battery 220, so that it is also necessary to charge the low-voltage battery 220 to have the state of charge at which it has reached a sufficiently stable state.

For this reason, it is preferable that the condition for entering step S13 in step S16 be based on the state of charge rather than the voltage of the low-voltage battery 120.

The circulation flow including steps S13, S14, S15, and S16 may be performed whenever necessary throughout the charging time.

However, in the case of rapid charging, the power required for the operation of the controller 250 and the like during the charging time may be sufficiently covered by the state of charge of the low-voltage battery 220. In this case, all the power from the charger FM throughout the charging time may be used to charge the high-voltage battery 210.

### <Difference between First Set Value and Second Set Value>

In one example, the first set value is 11 V and the second set value is 10.5 V. The reason why there is a difference between the first set value and the second set value is to reduce the operating time of the voltage converter 230 as much as possible.

For example, even when the voltage of the low-voltage battery becomes 10.7 V, the voltage converter 230 still remains in a deactivated state. This allows the deactivated state of the voltage converter 230 to be maintained for a longer period.

Accordingly, there is an advantage in that the time for which only the high-voltage battery 210 can be charged may be increased. This contributes to improving the charging speed of the high-voltage battery 210.

Furthermore, there is an advantage in that the operating time of the voltage converter 230 can be reduced, thereby reducing the heat generation time. The total amount of heat generated is reduced, so that the power consumption required to cool the heat of the voltage converter 230 utilizing a heat management device can be reduced.

As a result, the second set value is set to be as low as possible compared to the first set value, so that the charging speed of the high-voltage battery 210 is improved.

The above-described embodiments have been described merely using preferred examples of the present invention, and may have various forms of application. Therefore, the present invention should not be understood as being limited only to the content described above. Instead, the scope of the present invention should be understood as the separately described claims and their equivalents.

## Claims

1. A battery management system (200) for an agricultural electric vehicle, the battery management system (200) comprising:
a high-voltage battery (210) configured to provide high-voltage power and be charged with external power;
a low-voltage battery (220) configured to provide low-voltage power at a lower voltage than that of the high-voltage battery (210) and be charged with the power of the high-voltage battery (210) or external power;
a voltage converter (230) configured to convert the power of the high-voltage battery (210) into low-voltage power and supply this low-voltage power to the low-voltage battery (220) and low-voltage electrical loads (LL); and
a controller (250) configured to, when charging of the high-voltage battery (210) starts, check a voltage of the low-voltage battery (220) and control the voltage converter (230) to be activated or deactivated.

2. The battery management system (200) of claim 1, wherein the controller (250) controls the voltage converter (230) to be deactivated when the voltage of the low-voltage battery (220) is equal to or higher than a first set value in charging mode in which the high-voltage battery (210) is charged, and, after deactivating the voltage converter (230), controls the voltage converter (230) to be activated such that the low-voltage battery (220) is charged when the voltage of the low-voltage battery (220) is lower than a second set value that is lower than the first set value.

3. The battery management system (200) of claim 2, wherein the controller (250), when deactivating the voltage converter (230) in the charging mode, controls the low-voltage electrical loads (LL) to be operated with the power of the low-voltage battery (220).

4. The battery management system (200) of claim 2, wherein the charging of the low-voltage battery (220) is performed in a state in which the power of the low-voltage battery (220) is not supplied to the low-voltage electrical loads (LL).

5. The battery management system (200) of claim 2, wherein the controller (150), after activating the voltage converter (130) in the charging mode, controls the voltage converter (130) to be deactivated when a state of charge of the low-voltage battery (120) is equal to or higher than a third set value.

6. The battery management system (200) of claim 2, wherein:
the first set value is a voltage value at which operation of the low-voltage electrical loads (LL) operating in the charging mode can be performed using the power of the low-voltage battery (220); and
the second set value is a voltage value at which charging of the low-voltage battery (220) can start without damaging the low-voltage battery (220).

7. A battery management method for an agricultural electric vehicle, the battery management method comprising:
a first checking step <S12> of checking whether a voltage of a low-voltage battery (220) is equal to or higher than a first set value when charging of a high-voltage battery (210) starts;
a deactivation step <S13> of deactivating a voltage converter (230) when the voltage of the low-voltage battery (220) is determined to be equal to or higher than the first set value in the first checking step <S12>;
a second checking step <S14> of, after the deactivation step <S13>, checking whether a voltage of the low-voltage battery (220) is lower than a second set value; and
an activation step <S15> of activating the voltage converter (230) when the voltage of the low-voltage battery (220) is determined to be lower than the first set value in the first checking step <S12> or when the voltage of the low-voltage battery (220) is determined to be lower than the second set value in the second checking step <S14>;
wherein the first checking step <S12>, the deactivation step <S13>, the second checking step <S14>, and the activation step <S15> are performed in charging mode in which the high-voltage battery (110) is charged; and
wherein the second set value is a voltage value lower than the first set value.

8. The battery management method of claim 7, further comprising a third checking step <S16> of, after the activation step <S15>, checking whether a state of charge of the low-voltage battery (220) is equal to or higher than a third set value;
wherein the method enters the deactivation step <S13> when the state of charge of the low-voltage battery (220) is equal to or higher than the third set value in the third checking step <S16>.
